# EUROPEAN PATENT APPLICATION

(11) **EP 3 525 054 A1**
(43) Date of publication of application: **14.08.2019**
(21) Application number: 18155464.3
(22) Date of filing: 07.02.2018
(51) Int. Cl.: G05B 23/02, G06F 21/00

(54) **AN INTRUSION DETECTION SYSTEM FOR DETECTION OF INTRUSIONS IN AN AUTOMATED INFRASTRUCTURE**

(71) Applicant: Siemens Aktiengesellschaft, 80333 München (DE)
(72) Inventor: Müller, Martin C, 81379 München (DE); Roshchin, Mikhail, 81925 München (DE); Thon, Ingo, 81541 München (DE)

(57) **Abstract**

An intrusion detection system (1) and method for detection of intrusions in an automated infrastructure providing process data to a controller adapted to control processes within said automated infrastructure monitored by a primary control system (7) adapted to output monitoring data to an operator (OP) of said automated infrastructure, wherein the process data provided by the automated infrastructure (2) are collected by at least one edge device (10) and supplied by means of a network cloud infrastructure (11) to a remote model scoring component (12) of a secondary control system (13) adapted to match the collected process data with a data model to determine an operation behaviour of the automated infrastructure, wherein an intrusion into the automated infrastructure is detected by an intrusion detection component (14) of the secondary control system (13) if an abnormal operation behaviour of the automated infrastructure has been determined by the model scoring component (12) of the secondary control system (13) and at the same time, the monitoring data output by the primary control system (7) indicate a normal operation behaviour of the automated infrastructure.

## Description

The invention relates to a method and apparatus for automatic detection of intrusions in an automated infrastructure such as a plant or factory.

An automated infrastructure can comprise a plurality of components or subsystems to run or execute processes providing process data to a controller of the automated infrastructure. The controller of the automated infrastructure is adapted to control processes within the automated infrastructure which can be monitored by a primary control system such as a SCADA system to output monitoring data to an operator of the automated infrastructure. It is important to protect the industrial control of an automated infrastructure as well as the automated infrastructure itself against manipulations by external attackers. Manipulation of an automated infrastructure or subunits or machines of the automated infrastructure can ultimately lead to a destruction of components and/or subunits of the overall automated infrastructure and may reduce the efficiency or even the operability of the whole automated infrastructure. For example, a malicious virus software stored on a portable memory such as an USB stick can be incorporated into a primary control system of the automated infrastructure and affect controllers of the automated infrastructure such that machines or actuators are influenced during the operation. For instance, if the rotation speed of a machine is increased significantly under control of a controller affected by the malicious virus software, the controlled machine of the automated infrastructure can be destroyed.

Accordingly, it is an object of the present invention to provide an intrusion detection system as well as a method for detecting intrusions in an automated infrastructure which allows to detect unwanted malicious intrusions and increases the operation safety of the automated infrastructure.

This object is achieved according to a first aspect of the present invention by an intrusion detection system comprising the features of claim 1.

The invention provides according to the first aspect of the present invention an intrusion detection system for detection of intrusions in an automated infrastructure providing process data to a controller adapted to control processes within said automated infrastructure monitored by a primary control system adapted to output monitoring data to an operator of said automated infrastructure,
wherein the process data provided by the automated infrastructure are collected by at least one edge device and supplied by means of a network cloud infrastructure to a remote model scoring component of a secondary control system adapted to match the collected process data with a data model to determine an operation behaviour of the automated infrastructure,
wherein an intrusion into the automated infrastructure is detected by an intrusion detection component of the secondary control system if an abnormal operation behaviour of the automated infrastructure has been determined by the model scoring component of the secondary control system and at the same time, the monitoring data output by the primary control system indicate a normal operation behaviour of the automated infrastructure.

In a possible embodiment of the intrusion detection system according to the first aspect of the present invention, from the monitoring data output by the primary control system, the operation behaviour information about the current operation behaviour of the automated infrastructure is extracted automatically by an extraction unit connected to the network cloud infrastructure.

In a further possible embodiment of the intrusion detection system according to the first aspect of the present invention, the intrusion detection component of the secondary control system is adapted to receive the extracted operation behaviour information from the extraction unit via the network cloud infrastructure and is adapted to compare the received extracted operation behaviour information with operation behaviour information provided by the model scoring component of the secondary control system.

In a still further possible embodiment of the intrusion detection system according to the first aspect of the present invention, if the operation behaviour information provided by the model scoring component of the secondary control system indicates an abnormal operation behaviour of the automated infrastructure and at the same time the extracted operation behaviour information indicate a normal operation behaviour of the automated infrastructure, the intrusion detection component of the secondary control system triggers an alarm that an intrusion into the automated infrastructure has occurred and/or triggers other countermeasures to avoid negative consequences caused by the detected intrusion.

In a further possible embodiment of the intrusion detection system according to the first aspect of the present invention, the data model used by the model scoring component of the secondary control system to match current process data collected by the edge device comprises a machine learned data model stored in a data storage of the secondary control system.

In a further possible embodiment of the intrusion detection system according to the first aspect of the present invention, the machine learned data model is machine learned in a training phase by a model building component of the secondary control system using training data sets including historic process data of the automated infrastructure.

In a further possible embodiment of the intrusion detection system according to the first aspect of the present invention, the machine learned data model stored in the data storage of the secondary control system comprises a one class support vector machine, probabilistic data model and/or an autoencoder.

In a further possible embodiment of the intrusion detection system according to the first aspect of the present invention, the process data collected by the at least one edge device of the intrusion detection system comprise sensor data supplied by existing sensors of the automated infrastructure to the controller and/or sensor data generated by additional sensors provided in the automated infrastructure for intrusion detection.

In a further possible embodiment of the intrusion detection system according to the first aspect of the present invention, the process data collected by the at least one edge device of the intrusion detection system comprises actuator data applied by the controller to actuators of the automated infrastructure.

In a still further possible embodiment of the intrusion detection system according to the first aspect of the present invention, the monitoring data are output by the primary control system by means of a human machine interface to an operator of the automated infrastructure.

In a still further possible embodiment of the intrusion detection system according to the first aspect of the present invention, the monitoring data comprises visual monitoring data displayed by a display unit of said human machine interface to the operator of the automated infrastructure.

In a still further possible embodiment of the intrusion detection system according to the first aspect of the present invention, the monitoring data comprises audio monitoring data output by a loudspeaker of said human machine interface to an operator of the automated infrastructure.

In a still further possible embodiment of the intrusion detection system according to the first aspect of the present invention, the extraction unit of the intrusion detection system is adapted to extract operation behaviour information about the current operation behaviour of the automated infrastructure and comprises an image processor adapted to extract operation behaviour information from captured visual monitoring data displayed on a display unit of a human machine interface of said primary control system and/or comprises further an audio processor adapted to extract operation behaviour information from captured audio monitoring data output by a loudspeaker of the human machine interface of said primary control system.

In a still further possible embodiment of the intrusion detection system according to the first aspect of the present invention, the extraction unit of the intrusion detection system uses a machine learned data model adapted to extract operation behaviour information about the current operation behaviour of the automated infrastructure from images captured by a camera and/or audio captured by a microphone of the extraction unit.

In a still further possible embodiment of the intrusion detection system according to the first aspect of the present invention, the machine learned data model of the extraction unit of the intrusion detection system comprises an artificial neural network.

The invention further provides according to a further aspect a method for detecting intrusions in an automated infrastructure comprising the features of claim 15.

The invention provides according to the second aspect a method for detecting intrusions in an automated infrastructure providing process data to a controller adapted to control processes within the automated infrastructure,
wherein the method comprises the steps of:
monitoring the automated infrastructure by a primary control system of the automated infrastructure to generate monitoring data output to an operator of the automated infrastructure, collecting process data provided by the automated infrastructure by at least one edge device and supplying the collected process data to a remote model scoring component,
matching by the model scoring component the received process data with a data model to determine an operation behaviour of the automated infrastructure and
detecting an intrusion into the automated infrastructure by an intrusion detection component if an abnormal operation behaviour of the automated infrastructure has been determined by the model scoring component and at the same time, the monitoring data output by the primary control system indicate a normal operation behaviour of the automated infrastructure.

In the following, possible embodiments of the different aspects of the present invention are described in more detail with reference to the enclosed figures.
- Fig. 1: shows a schematic diagram for illustrating a possible exemplary embodiment of an intrusion detection system according to the first aspect of the present invention;
- Fig. 2: shows a flowchart of a possible exemplary embodiment of a method for detecting intrusions in an automated infrastructure according to a second aspect of the present invention.

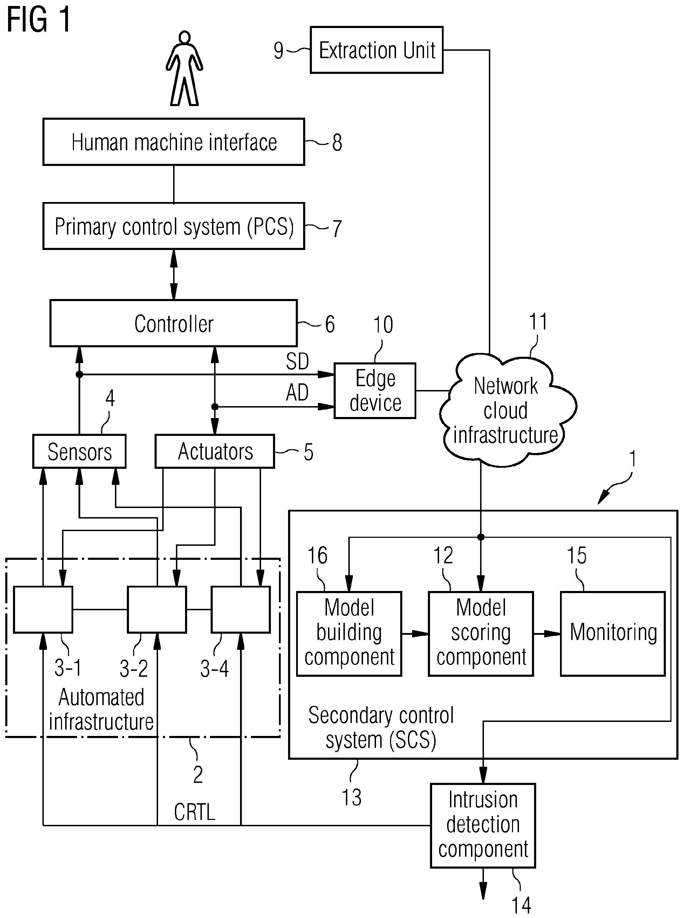

As can be seen in the schematic diagram of Fig. 1, an intrusion detection system 1 according to the first aspect of the present invention can be provided for an associated automated infrastructure 2 such as a production factory or power plant. In a possible embodiment, the automated infrastructure 2 can comprise an associated corresponding intrusion detection system 1. In a further possible embodiment, an intrusion detection system 1 can be provided for detection of intrusions in more than one automated infrastructure 2. The automated infrastructure 2 as illustrated in Fig. 1 can comprise a plurality of subunits or subcomponents 3-1, 3-2, 3-n which can interact with each other and which can communicate with each other for instance via a data and/or control bus. The subunits or subsystems 3-i can for instance comprise machines within a production factory. The processes performed by the entities of the automated infrastructure 2 can be controlled using sensors 4 and actuators 5. The sensors 4 can comprise a plurality of different sensors monitoring parameters of the automated processes executed within the automated infrastructure 2. The sensors 4 can for instance monitor physical parameters such as temperature, pressure, etc. at entities 3-i of the automated infrastructure 2. An automated infrastructure 2 can comprise a plurality of components including hardware components and/or software components. These components can generate process data which can be supplied to a controller 6 of the automated infrastructure 2. The process data can include sensor data SD provided by a plurality of different sensors 4 attached to components of the automated infrastructure 2. The sensor data SD can reflect operational parameters of the processes executed by components of the automated infrastructure 2. The industrial controller 6 of the automated infrastructure 2 can for example be a Sinumeric, or a PLC like the S7 processor or any other kind of control unit having a processor or execution engine. The industrial controller 6 is adapted to control actuators 5 connected to entities 3-i of the automated infrastructure 2 as illustrated in Fig. 1. The actuators 5 can be for instance valves or motors which influence industrial processes executed by entities 3-i of the automated infrastructure 2. A manipulation of actuator data or control data generated by the controller 6 could influence the automated processes within the automated infrastructure 2 negatively and may even lead to damaging and/or destruction of hardware and/or software components within the automated infrastructure 2. For instance, the actuator data applied by the actuators 5 can influence the rotation speed of a rotating hardware component of the automated infrastructure 2 to such a degree that the rotating component is damaged or destroyed. The controller 6 of the automated infrastructure 2 can be connected via an interface to a primary control system 7 such as a SCADA system.

The primary control system 7 comprises a human machine interface 8 for an operator OP of the automated infrastructure 2 as illustrated in Fig. 1. The automated infrastructure 2 is monitored by the primary control system 7 to output monitoring data to the operator OP of the automated infrastructure 2 by means of the human machine interface 8. The monitoring data can comprise visual monitoring data which are displayed by a display unit of the human machine interface 8 to the operator of the automated infrastructure 2. The monitoring data can further comprise audio monitoring data output by a loudspeaker of the human machine interface 8 to the operator of the automated infrastructure 2. The human machine interface 8 can comprise a graphical user interface GUI allowing the operator of the automated infrastructure 2 to monitor the automated infrastructure 2 and to provide input into or instructions for the primary control system 7.

The intrusion detection system 1 according to the present invention further comprises at least one extraction unit 9 which is adapted to extract operation behaviour information about the current operation behaviour of the automated infrastructure 2 based on the monitoring data output to the operator OP via the human machine interface 8. In a possible embodiment, the extraction unit 9 of the intrusion detection system 1 comprises an image processor adapted to extract operation behaviour information from captured visual monitoring data displayed on a display unit of the human machine interface 8. For instance, the human machine interface 8 of the primary control system 7 can comprise a control panel having a plurality of different analog or digital display instruments illustrating different kinds of operation parameters of the automated infrastructure 2 such as the amplitude of an electrical current, the amplitude of an electrical voltage, a pressure or a temperature of different specific components 3-i within the automated infrastructure 2. The operator OP of the automated infrastructure 2 normally sits in front of the human machine interface 8 or control panel of the primary control system 7 and monitors an operation behaviour of the automated infrastructure 2. For instance, if a display of the human machine interface 8 indicates that the operation behaviour of a specific component within the automated infrastructure 2 is outside a predefined operation range, the operator OP may initiate suitable countermeasures such as inspecting the affected component or if the observed operation behaviour is critical by switching off subunits of the automated infrastructure 2 or even the whole automated infrastructure 2. In a possible embodiment, the extraction unit 9 of the intrusion detection system 1 comprises an image processor adapted to extract operation behaviour information from captured visual monitoring data displayed on a display unit of the human machine interface 8 of the primary control system 7. The visual monitoring data can be captured in a possible embodiment by one or more cameras of the extraction unit 9. The extraction unit 9 can comprise one or more cameras capturing images of one or more display units of the human machine interface 8. Each camera has a predefined field of view and is directed to the surface of the whole human machine interface 8 or to specific positions or areas of the human machine interface 8 including one or more display units. The display unit can be an analog display unit including for instance a pointer swivelling around an axis to indicate an amplitude of an electrical current I or an electrical voltage V. The display unit can also be a digital display unit displaying digital numbers or a bit pattern illustrating physical parameters and/or parameter sequences associated with entities 3-i of the automated infrastructure 2. For example, a specific camera can be directed to a display instrument indicating an output parameter relevant to the operation behaviour of the automated infrastructure 2. The extraction unit 9 comprising a camera directed to the screen of the display unit can extract from the captured images by means of an image processor an operation behaviour information concerning the observed physical parameter output by the primary control system 7. For instance, the primary control system 7 affected by a malicious virus may output parameter values via the display unit of the human machine interface 8 making the operator OP of the automated infrastructure 2 believe that the respective operation behaviour is in a normal non-critical range whereas in reality, the corresponding component such as a rotating hardware component has reached a rotation speed which may damage or destroy the respective component.

The extraction unit 9 of the intrusion detection system 1 can further comprise an audio processor adapted to extract operation behaviour information from captured audio monitoring data output by a loudspeaker of the human machine interface 8 of the primary control system 7 to the monitoring operator OP of the automated infrastructure 2. For instance, a loudspeaker of the human machine interface 8 may output a warning signal indicating a critical operation state of the automated infrastructure 2 or may give audio instructions to the observing operator OP of the automated infrastructure 2. If the primary control system 7 is for instance affected by a malicious manipulating virus software, an acoustic warning signal which should be output by a loudspeaker of the human machine interface 8 to the operator OP could be suppressed so that the operator OP does not become aware of the critical operation state of the automated infrastructure 2. If the primary control system 7 is affected by a malicious virus, the primary control system 7 can even output acoustic recommendations to confuse the operator OP of the automated infrastructure 2. For instance, it might lead the operator OP of the automated infrastructure 2 to perform countermeasures which do not improve the current situation but which may even deteriorate the operation behaviour of the affected subcomponent of the automated infrastructure 2. In a possible embodiment, the extraction unit 9 of the intrusion detection system 1 can use a machine learned data model adapted to extract operation behaviour information about the current operation behaviour or operation state of the automated infrastructure 2 from images captured by one or more cameras and/or audio data captured by one or more microphones of the extraction unit 9. In a possible embodiment, the machine learned data model of the extraction unit 9 can comprise an artificial neural network.

As illustrated in the embodiment of Fig. 1, process data provided by the automated infrastructure 2 are collected by at least one edge device 10 of the intrusion detection system 1. The process data provided by the automated infrastructure 2 and collected by the edge device 10 are supplied by means of a network cloud infrastructure 11 to a remote model scoring component 12 of a secondary control system 13 forming part of the intrusion detection system 1. The secondary control system 13 is adapted to match the collected process data with a data model to determine operation behaviour of the automated infrastructure 2. In a possible embodiment, an intrusion into the automated infrastructure 2 is detected automatically by an intrusion detection component 14 of the secondary control system 13 if an abnormal operation behaviour of the automated infrastructure 2 has been determined by the model scoring component 12 of the secondary control system 13 and at the same time, the monitoring data output by the primary control system 7 via the human machine interface 8 indicate a normal operation behaviour of the automated infrastructure 2. Accordingly, if the model scoring component 12 of the intrusion detection system 1 determines an abnormal operation behaviour of the automated infrastructure 2 and at the same time, the monitoring data indicate also an abnormal operation behaviour of the automated infrastructure 2, i.e. if the determined operation behaviour are not in contradiction to each other, the intrusion detection component 14 of the secondary control system 13 concludes that a normal fault within the automated infrastructure 2 has occurred. However, if the monitoring data output via the human machine interface 8 or control panel to the operator OP indicate a normal operation behaviour of the automated infrastructure 2 and at the same time, an abnormal operation behaviour has been determined by the model scoring component 12, it is likely that the contradicting information about the operation behaviour are a consequence of a malicious intrusion that wants the operator of the automated infrastructure 2 make believe that the operation state or operation behaviour of the automated infrastructure 2 is normal whereas in fact the operation behaviour or operation state of the automated infrastructure 2 is abnormal.

In a possible embodiment, the intrusion detection component 14 of the secondary control system 13 is adapted to receive the extracted operation behaviour information from the extraction unit 9 via the network cloud infrastructure 11. In a possible implementation, the extracted operation behaviour information generated by the extraction unit 9 can be supplied via the network cloud infrastructure 11 into a memory or buffer 15 of the secondary control system 13 to which the intrusion detection component 14 has access. The intrusion detection component 14 is adapted in a possible embodiment to compare the received extracted operation behaviour information which can be stored in the storage 15 with the operation behaviour information provided by the model scoring component 12 of the secondary control system 13. If the operation behaviour information provided by the model scoring component 12 of the secondary control system 13 indicates an abnormal operation behaviour of the automated infrastructure 2 and at the same time, the extracted operation behaviour information stored in the buffer 15 indicate a normal operation behaviour of the automated infrastructure 2, the intrusion detection component 14 of the secondary control system 13 can trigger in a possible embodiment an alarm or a warning that an intrusion into the automated infrastructure 2 has occurred and can in a further possible embodiment trigger other countermeasures to avoid any negative consequences caused by the detected malicious intrusion. In a possible embodiment, the intrusion detection component 14 can generate control signals and perform countermeasures within the automated infrastructure 2. These control signals can be applied via interfaces to the affected subunits or components 3-i of the automated infrastructure 2. For instance, if a malicious virus has affected a rotating component of the automated infrastructure 2 such that its rotation speeds exceeds an admissible operation range, the intrusion detection component 14 can generate a control signal CRTL to slow down the rotation speed or to switch off the affected component thus avoiding that the component or subunit 3-i is damaged or destroyed by the malicious virus.

In a further possible implementation, the intrusion detection system 1 can also provide a warning signal or an alarm signal supplied to the operator OP in front of the human machine interface 8 via the network cloud infrastructure 11. In this embodiment, the extraction unit 9 situated close to the human machine interface 8 of the operator is extended to include a human machine interface 8 of its own indicating a warning or alarm which informs the operator OP of the automated infrastructure 2 that the monitoring data output via the human machine interface 8 of the primary control system 7 might have been intentionally changed to misinform the operator OP about the real current operation behaviour of components of the automated infrastructure 2. In a possible implementation, the extraction unit 9 comprising an interface of its own can give an acoustic warning informing to the operator OP that the parameters or values output by the human machine interface 8 of the primary control system are most likely wrong and can no longer be trusted. In this case, the operator OP might switch off the automated infrastructure 2 via the primary control system 7 and the controller 6 and may check whether the primary control system 7 is affected by malicious virus software having entered the system.

A data model used by the model scoring component 12 of the secondary control system 13 to match the current process data collected by the edge device 10 can comprise a machine learned data model stored in a data storage of the secondary control system 13. In a possible embodiment, the machine learned data model can be trained or machine learned in a training phase by a model building component 16 of the secondary control system 13 using training data sets including historic process data of the automated infrastructure 2. In a possible embodiment, the machine learned data model stored in the data storage of the secondary control system 13 can comprise a one class support vector machine. Further, the machine learned data model stored in the data storage can comprise probabilistic data models and/or autoencoders.

The model building component 16 can be utilized during an initial training phase and later to deal with false alarms. The model building component 16 may utilize in a possible implementation algorithms to learn machine learning models. These data models can comprise one class support vector machines, autoencoders (variational autoencoder, recurrent neural autoencoder, deep convolutional autoencoder, neural autoencoder or PCA-based autoencoder) or alternatively, probabilistic data models like Gaussian processes, Bayesian networks, hidden Markov models HMS, dynamic Bayesian networks. The training algorithm and the forming of the data input to the learned data model can be based on sensory information depending on the data model used.

The building or formation of the training data or training data sets can be performed as follows. For one class support vector machines SVM and Bayesian networks, an observation window of e.g. the last ten values with all sensory information of a subsystem in the automated infrastructure 2 can be used. In a non-recurrent autoencoder, the same information may be used, however, like common in autoencoders, a so-called target vector may correspond to the input vector. For recurrent autoencoders and sequential probabilistic models such as HMM and DBM, the measurements and data can be presented as a constant data stream.

The model scoring component 12 of the secondary control system 13 can use the built data model and can calculate scores against the sensor measurement. If an abnormal behaviour is detected an alarm may be raised by the intrusion detection component 14. The detection of an abnormal behaviour can depend on the implemented algorithm. One class SVM and probabilistic data models can directly output a measurement of the data perplexity. The autoencoders with sensory information can be presented to the autoencoder. The result generated by the autoencoder can be compared in a possible implementation to the input and the perplexity is then generated by means of a measurement of the difference, e.g. mean squared error.

In a possible embodiment, the process data collected by the at least one edge device 10 can comprise sensor data supplied by existing sensors already provided in the automated infrastructure 2. These existing sensors provide sensor data to the controller 6 of the automated infrastructure 2. The sensor data SD collected by the edge device 10 can also comprise sensor data generated by additional sensors provided in the automated infrastructure 2 specifically for the purpose of intrusion detection by the intrusion detection system 1. The edge device 10 can collect the actuator settings of the actuators 5 and the sensor data SD, e.g. via a MindSphere forming the network cloud infrastructure 11.

The extraction unit 9 can form part in a possible embodiment of an optional computer vision system which contains one or more cameras which allow by means of computer vision to extract values displayed to the user or operator OP by means of the human machine interface 8 of the primary control system 7. The computer vision system can contain at least one camera directed to the human machine interface 8 of a primary control system 7 such as a SCADA system. The information captured by the camera of the computer vision system can be processed by a computer vision component, e.g. a deep convolutional neural network, an artificial neural network, a SWM which can extract the displayed values. Further, a classifier can be run which detects changes in the user interface which in turn might indicate a manipulation.

The secondary control system 13 of the intrusion detection system 1 is adapted to monitor the primary control system 7. The secondary control system 13 does not require any form of customization and is therefore more resilient against manipulation than the primary control system 7. The level of integration of the secondary control system 13 and the primary control system 7 can vary from full integration with no redundancy to a system which shares the sensory infrastructure with the primary control system 7 to a secondary control system 13 where all information sources are provided completely in redundant form. In a possible embodiment, the SCADA system 7 which may supposedly show manipulated values to the operator is monitored by at least one camera of a computer vision system forming an extraction unit 9. This allows to differentiate abnormal behavior or faults towards real manipulation of the automated infrastructure 2. The intrusion detection system 1 can be used for any kind of automated infrastructure 2 and is applicable whenever there is a controller or any process which may lead to a damaging or destruction of components of an automated infrastructure 2.

The automated infrastructure 2 can comprise a wide variety of different automated infrastructures such as factories, power plants, chemical plants, offshore and onshore platforms, etc. Any kind of critical infrastructure which might be attacked by malicious software can be protected by the intrusion detection system 1 according to the present invention. The intrusion detection system 1 can provide a high degree of protection against hackers trying to infiltrate the primary control system 7 with a malicious software which manipulates processes performed by components of the automated infrastructure 2. The intrusion detection system 1 forms an autonomous system which is coupled to the automated infrastructure 2 via an edge device 10 and a network cloud infrastructure 11 such as MindSphere. The system 1 is capable to learn how typical and healthy processes within the automated infrastructure 2 look like including all possible operational modes, i.e. steady states, partial loads, downtime hours, start and stop attempts, etc. The intrusion detection system 1 according to the present invention is capable to detect intrusions even if the primary control system 7 does not react. The intrusion detection system 1 is further capable to keep knowledge or information about various failure modes in order to classify any risk and to avoid too many false positive alerts.

The intrusion detection system 1 according to the present invention can be used for any kind of industrial infrastructure having any kind of primary control system 7. Further, the intrusion detection system 1 according to the present invention can be provided without changing the hardware and/or software of the primary control system 7. Accordingly, the intrusion detection system 1 can even be implemented during operation runtime of the automated infrastructure 2 without affecting its normal operation. In a possible embodiment, the intrusion detection system 1 can comprise a central secondary control system 13 which is adapted to control several primary control systems 7 of associated automated infrastructures 2 in parallel. In a possible embodiment, several automated infrastructures 2 of the same kind and having each an associated primary control system 7 can be monitored by a common intrusion detection system 1 according to the present invention. In a possible embodiment, if one of the automated infrastructures 2 has been detected to be affected by a malicious intrusion software, the intrusion detection system 1 can in a possible embodiment issue a warning to all other automated infrastructures 2 of the same kind that their primary control system 7 might also be affected by the malicious virus.

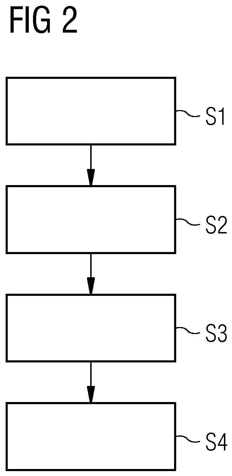

Fig. 2 illustrates a possible exemplary embodiment of a method for detecting intrusions in an automated infrastructure 2 according to the second aspect of the present invention.

The automated infrastructure 2 provides process data to a controller such as the controller 6 illustrated in Fig. 1 adapted to control processes within the automated infrastructure 2.

In a first step S1, the automated infrastructure 2 is monitored by its primary control system 7 to generate monitoring data output to an operator of the automated infrastructure, for instance by a human machine interface such as the human machine interface 8 illustrated in Fig. 1.

In a further step S2, process data provided by the automated infrastructure 2 is collected by at least one edge device 10 and which supplies the collected process data including sensor data SD and/or actuator data via a network cloud infrastructure 11 to a remote model scoring component 12 of a secondary control system 13.

In a further step S3, the model scoring component 12 of the secondary control system 13 can match the received process data with a data model to determine an operation behaviour of the automated infrastructure 2.

An intrusion into the automated infrastructure 2 is detected in step S4 by an intrusion detection component 14 if an abnormal operation behaviour of the automated infrastructure 2 has been determined by the model scoring component 12 and simultaneously or at the same, the monitoring data output by the primary control system 7 via the human machine interface 8 indicate a normal operation behaviour of the automated infrastructure 2.

## Claims

1. An intrusion detection system (1) for detection of intrusions in an automated infrastructure (2) providing process data to a controller (6) adapted to control processes within said automated infrastructure (2) monitored by a primary control system (7) adapted to output monitoring data to an operator of said automated infrastructure (2), wherein the process data provided by the automated infrastructure (2) are collected by at least one edge device (10) and supplied by means of a network cloud infrastructure (11) to a remote model scoring component (12) of a secondary control system (13) adapted to match the collected process data with a data model to determine an operation behaviour of the automated infrastructure (2), wherein an intrusion into the automated infrastructure (2) is detected by an intrusion detection component (14) of the secondary control system (13) if an abnormal operation behaviour of the automated infrastructure (2) has been determined by the model scoring component (12) of the secondary control system (13) and at the same time, the monitoring data output by the primary control system (7) indicate a normal operation behaviour of the automated infrastructure (2).

2. The intrusion detection system according to claim 1 wherein from the monitoring data output by the primary control system (7), the operation behaviour information about the current operation behaviour of the automated infrastructure (2) is extracted automatically by an extraction unit (9) connected to the network cloud infrastructure (11).

3. The intrusion detection system according to claim 2 wherein the intrusion detection component (14) of the secondary control system (13) is adapted to receive the extracted operation behaviour information from the extraction unit (9) via the network cloud infrastructure (11) and is adapted to compare the received extracted operation behaviour information with operation behaviour information provided by the model scoring component (12) of the secondary control system (13).

4. The intrusion detection system according to claim 3 wherein if the operation behaviour information provided by the model scoring component (12) of the secondary control system (13) indicates an abnormal operation behaviour of the automated infrastructure (2) and at the same time the extracted operation behaviour information indicate a normal operation behaviour of the automated infrastructure (2), the intrusion detection component (14) of the secondary control system (13) triggers an alarm that an intrusion into the automated infrastructure (2) has occurred and/or triggers other countermeasures to avoid negative consequences caused by the detected intrusion.

5. The intrusion detection system according to any of the preceding claims 1 to 4 wherein the data model used by the model scoring component (12) of the secondary control system (13) to match current process data collected by said edge device (10) comprises a machine learned data model stored in a data storage of the secondary control system (13).

6. The intrusion detection system according to claim 5 wherein the machine learned data model is machine learned in a training phase by a model building component (16) of the secondary control system (13) using training data sets including historic process data of the automated infrastructure (2).

7. The intrusion detection system according to claim 5 or 6 wherein the machine learned data model stored in the data storage of the secondary control system (13) comprises one class support vector machines, probabilistic data models and autoencoders.

8. The intrusion detection system according to any of the preceding claims 1 to 7 wherein the process data collected by said at least one edge device (10) comprise sensor data supplied by existing sensors (4) of the automated infrastructure (2) to the controller (6) and/or sensor data generated by additional sensors (4') provided in the automated infrastructure (2) for intrusion detection.

9. The intrusion detection system according to any of the preceding claims 1 to 8 wherein the process data collected by said at least one edge device (10) comprises actuator data applied by the controller (6) to actuators (5) of the automated infrastructure (2).

10. The intrusion detection system according to any of the preceding claims 1 to 9 wherein the monitoring data are output by the primary control system (7) by means of a human machine interface (8) to an operator of the automated infrastructure (2).

11. The intrusion detection system according to claim 10 wherein the monitoring data comprises visual monitoring data displayed by a display unit of said human machine interface (8) to the operator of the automated infrastructure (2) and
audio monitoring data output by a loudspeaker of said human machine interface (8) to the operator of the automated infrastructure (2).

12. The intrusion detection system according to any of the preceding claims 2 to 11 wherein the extraction unit (9) being adapted to extract operation behaviour information about the current operation behaviour of the automated infrastructure (2) comprises an image processor adapted to extract operation behaviour information from captured visual monitoring data displayed on a display unit of the human machine interface (8) of said primary control system (7) and/or comprises an audio processor adapted to extract operation behaviour information from captured audio monitoring data output by a loudspeaker of the human machine interface (8) of said primary control system (7).

13. The intrusion detection system according to any of the preceding claims 2 to 12 wherein the extraction unit (9) uses a machine learned data model adapted to extract operation behaviour information about the current operation behaviour of the automated infrastructure (2) from images captured by a camera and/or audio captured by a microphone of the extraction unit (9).

14. The intrusion detection system according to claim 13
wherein the machine learned data model of the extraction unit (9) comprises an artificial neural network.

15. A method for detecting intrusions in an automated infrastructure (2) providing process data to a controller adapted to control processes within the automated infrastructure (2),
wherein the method comprises the steps of:
(a) monitoring (S1) the automated infrastructure (2) by a primary control system (7) of the automated infrastructure (2) to generate monitoring data output to an operator of the automated infrastructure (2);
(b) collecting (S2) process data provided by the automated infrastructure (2) by at least one edge device (10) and supplying the collected process data to a remote model scoring component (12);
(c) matching (S3) by the model scoring component (12) the received process data with a data model to determine an operation behaviour of the automated infrastructure (2); and
(d) detecting (S4) an intrusion into the automated infrastructure (2) by an intrusion detection component (14) if an abnormal operation behaviour of the automated infrastructure (2) has been determined by the model scoring component (12) of the secondary control system (13) and at the same time, the monitoring data output by the primary control system (7) indicate a normal operation behaviour of the automated infrastructure (2).
